# EUROPEAN PATENT APPLICATION

(11) **EP 3 205 566 A1**
(43) Date of publication of application: **16.08.2017**
(21) Application number: 16155038.9
(22) Date of filing: 10.02.2016
(51) Int. Cl.: B62K 15/00, B62K 9/00

(54) **ARRANGEMENT IN CONNECTION WITH FOLDABLE VEHICLE AND FOLDABLE VEHICLE**

(71) Applicant: Oü, Stigo, 10140 Tallinn (EE)
(72) Inventor: Õunapuu, Matti, 10111 Tallinn (EE); Saarik, Erki, Harju County (EE)
(74) Representative: Berggren Oy, Helsinki & Oulu

(57) **Abstract**

The present method is a transporting support arrangement (1) for a foldable vehicle (2) having at least a first vehicle position (200A) and a second vehicle position (200D), wherein the arrangement (1) comprises a transporting support member (3), and a displacement mechanism (4) arranged to displace the transporting support member (3) from a first transporting position (100A) of the transporting support member relative to the foldable vehicle (2) to a second transporting position (100B) of the transporting support member relative to the foldable vehicle (2) in response to a change of the foldable vehicle (2) from the first vehicle position (200A) to the second vehicle position (200D), and back from the second transporting position (100B) to the first transporting position (100A) in response to a change of the foldable vehicle (2) from the second vehicle position (200D) to the first vehicle position (200A).

## Description

### TECHNICAL FIELD

The invention concerns in general the technical field of foldable vehicles. Especially the invention concerns arrangements for facilitating transporting a foldable vehicle.

### BACKGROUND

There are solutions presented in the prior art in which there is an auxiliary wheel coupled to the foldable vehicle for transporting purposes of the vehicle. In these solutions the wheel is fixed at a certain position and is usable once the vehicle has been folded into a transporting position, especially into a dragging position.

In some solutions, the position of the auxiliary wheel is adjustable. Once the user wants to start transporting the bike, the position of the auxiliary wheel is adjusted, for example, by first unfastening screws, adjusting the position and then fastening the screws and fixing the wheel into the transporting position.

The drawbacks of the prior art solution, among others, are that the auxiliary wheel for transporting is positioned too close to the ground from the riding perspective in which case the wheel touches the ground when riding on a rough surface or around corners, etc. If, on the other hand, the wheel is placed at a position too high, it is difficult, especially for a short person, to drag the vehicle because it must be lifted to a relatively high angle with respect to the ground. In solutions which the position of the auxiliary wheel can be manually adjusted, unfastening of fasteners, adjusting the position and then fastening the fasteners again is required. This is tedious and uncomfortable because user must touch part of the vehicle prone to dirt.

### SUMMARY

An object of the present invention is to present an arrangement in connection with a foldable vehicle to eliminate or at least alleviate the problems related to the prior art solutions.

The object of the present invention can be reached by the features of the arrangement defined by the independent claim.

The present invention relates to an arrangement in connection with a foldable vehicle and a foldable vehicle comprising the arrangement according to claims 1 and 13, respectively.

According to a first aspect of the present invention, a transporting support arrangement for a foldable vehicle, such as e.g. a bicycle, an electric bicycle, a scooter or a moped, comprises at least a first vehicle position and a second vehicle position. As an example the transporting support arrangement as such may be e.g. a bike frame or an additional system to be arranged in the bike frame or bike, or into another vehicle. The vehicle may, e.g., comprise two or three wheels, or a ski or skis, or a track or tracks. In the first vehicle position the vehicle is in riding position. In the second vehicle position the vehicle is in the transporting position. In the transporting position the vehicle may be advantageously folded. In addition, the arrangement comprises a transporting support member and a displacement mechanism. 'Transporting' in this document means dragging, pushing, or pulling, or other such means for moving a folded vehicle, e.g., in a similar manner as transporting a wheeled suitcase.

As an example the transporting support member may be e.g. an auxiliary wheel or wheel, slide, roller, ski, or the like suitable for supporting said vehicle against the ground during transporting. As an example the displacement member may be, for example a spring, a piston, a (second) rod, a rack, a rope, a hawser, or a magnet. The displacement mechanism is advantageously arranged to displace the transporting support member from a first transporting position of the transporting support member relative to the foldable vehicle to a second transporting position of the transporting support member relative to the foldable vehicle in response to a change of position of the foldable vehicle from the first vehicle position to the second vehicle position. In addition, the displacement mechanism is advantageously arranged to displace the transporting support member back from the second transporting position to the first transporting position in response to a change of the foldable vehicle from the second vehicle position to the first vehicle position.

In addition, the transporting support member may be arranged to protrude in the direction of the longitudinal axis of the foldable vehicle in response to the change of the foldable vehicle from the first vehicle position to the second vehicle position. Furthermore, the transporting support member may be arranged to retract in the direction of the longitudinal axis in response to the change of the foldable vehicle from the second vehicle position to the first vehicle position. It should be noted that the transporting support member may move also in the vertical direction at the same time when moving in the direction of the longitudinal axis in response to the change of the foldable vehicle between the first and second vehicle positions.

The arrangement may further comprise a locking mechanism configured to lock the transporting support member to the second transporting position in the second vehicle position. Additionally or alternatively, the locking mechanism may also be configured to lock the foldable vehicle into the second vehicle position.

Furthermore, the displacement mechanism may further comprise a displacement member, which is coupled with the transporting support member. The displacement member may be arranged to displace the transporting support member between said first and second transporting positions in response to the change of the foldable vehicle between said first and second vehicle positions, respectively.

Said displacement mechanism may be arranged to couple with said transporting support member via said displacement member. Said displacement mechanism may thereby be arranged to displace said transporting support member between said first and second transporting positions.

Furthermore, the displacement mechanism may comprise, for example, a wedge or a rod. The wedge or the rod may be arranged to move in response to a change of the foldable vehicle from the first vehicle position to the second vehicle position. In addition, the wedge or the rod may be arranged to couple with said transporting support member, e.g. via a displacement member such as a spring or a (second) rod, or a piston, and thereby displace said transporting support member from said first transporting position to said second transporting position.

The wedge may comprise an indent for receiving a counterpart in response to the change of the foldable vehicle from the first vehicle position to the second vehicle position. Said counterpart may thereby be coupled with said transporting support member, and whereupon said wedge may be arranged to displace said transporting support member from said first transporting position to said second transporting position by displacing said counterpart.

The counterpart may comprise a roller or a sliding surface arranged to be in contact with the displacement mechanism, such as e.g. with the wedge or the rod, during at least a part of the change of position from the first position of the transporting support member to the second position of the transporting support member.

The transporting support arrangement may comprise at least two transporting support members on opposite sides of the plane defined by the directions of height and longitudinal axis of the foldable vehicle. Additionally, said at least two transporting support members may be arranged at the respective positions relative to the foldable vehicle, i.e. for example in case of a two-wheel vehicle, on both sides of the rear wheel.

According to a second aspect of the present invention, a foldable vehicle, such as e.g. a bicycle, an electric bicycle, a scooter or a moped, comprises a transporting support arrangement according to the first aspect of the present invention.

The foldable vehicle may comprise an upper frame to which the displacement member is in connection with. Additionally, in response to a change of position of the upper frame, and thereby the foldable vehicle, the transporting support member may be displaced.

In addition to being integrated or at least integrally coupled into the frame of the vehicle, the arrangement according to the first aspect of the present invention may also be a separate system to be coupled with the foldable vehicle.

The exemplary embodiments of the invention presented in this patent application are not to be interpreted to pose limitations to the applicability of the appended claims. The verb "to comprise" is used in this patent application as an open limitation that does not exclude the existence of also un-recited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objectives and advantages thereof, will be best understood from the following description of specific embodiments when read in connection with the accompanying drawings.

The transporting support arrangement according to the present invention has significant benefits and advantages over the prior art solutions. The transporting support arrangement operates in response to a change of the foldable vehicle between driving and transporting positions. Thus the user does not have to manually adjust the transporting support member which can be tedious and include touching parts of the vehicle prone to dirt. Furthermore, the transporting support member is positioned in the riding position such that it does not make a contact with the ground even when riding on rough surfaces or around corners or making any non-linear movement, which can potentially be dangerous. Also in transporting position, the transporting support member is positioned such that the vehicle is ease to drag for even a short user.

### BRIEF DESCRIPTION OF FIGURES

The embodiments of the invention are illustrated by way of example, and not by way of limitation, in the figures of the accompanying drawings.
- Figure 1: illustrates schematically an arrangement in connection with a foldable vehicle according to one embodiment of the present invention wherein the foldable vehicle is in the first vehicle position and the transporting support member is in the first transporting position;
- Figure 2: illustrates schematically an arrangement in connection with a foldable vehicle according to one embodiment of the present invention wherein the vehicle is in a first intermediate position and the transporting support member is in the first transporting position;
- Figure 3: illustrates schematically an arrangement in connection with a foldable vehicle according to one embodiment of the present invention wherein the vehicle is in a second intermediate position and the transporting support member is in the second transporting position; and
- Figure 4: illustrates schematically an arrangement in connection with a foldable vehicle according to one embodiment of the present invention wherein the foldable vehicle is in the second vehicle position and the transporting support member is in the second transporting position.

### DESCRIPTION OF SOME EMBODIMENTS

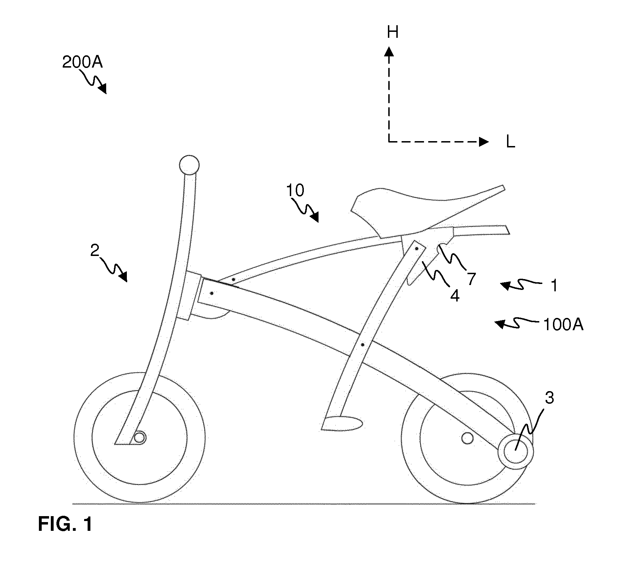

Figure 1 illustrates schematically a transporting support arrangement 1 in connection with a foldable vehicle 2 according to an embodiment of the present invention. The foldable vehicle 2 in Figs. 1-4 is a two-wheel vehicle. The height H and longitudinal L axes of the vehicle have been marked in Figs. 1-4 with dashed lines.

The foldable vehicle 2 in Fig. 1 is in the first vehicle position 200A, i.e. in riding position, and the transporting support member 3, i.e. an auxiliary wheel in this case, is in the first transporting position 100A. The transporting support member 3 may also be an additional or be replaced by a ski, a roller, or a slide depending on the embodiment.

The transporting support member 3 may advantageously be high enough from the ground in the first transporting position 100A and thereby in the first vehicle position 200A, i.e. in the riding position. This prevents the transporting support member 3 from making a contact with the ground when riding in rough surfaces or around corner or making any other non-linear movement. Advantageously, the transporting support member 3 may also be in a position in the direction of the longitudinal axis L and/or height H of the foldable vehicle 2 such as not protrude or extend further or at least not much further than other parts of the vehicle 2 as shown in Fig. 1. In the embodiment in Fig. 1, the displacement mechanism 4 is a wedge. The wedge is coupled to the upper frame 10 of the foldable vehicle 2. The wedge in this particular embodiment has substantially a shape of a triangle but may also have other shapes such as a pentagon.

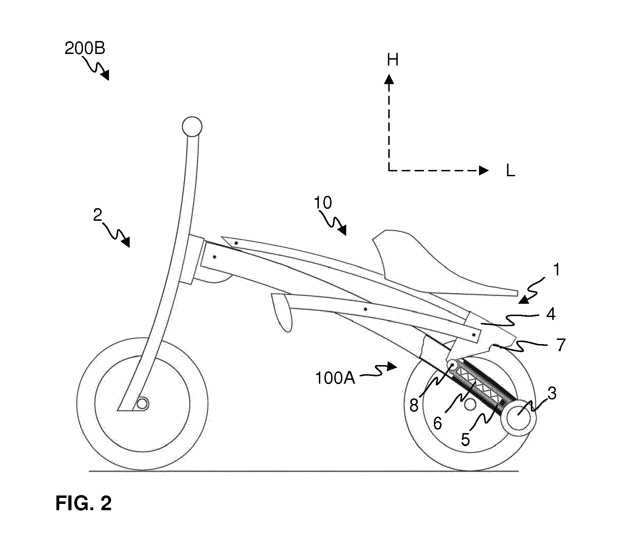

Figure 2 illustrates schematically a transporting support arrangement 1 in connection with a foldable vehicle 2 according to an embodiment of the present invention wherein the transporting support member 3 is still in the first transporting position 100A but the upper frame 10 has been folded so that the foldable vehicle 2 is in the first intermediate position 200B.

In an embodiment shown in Fig. 2, the displacement mechanism 4 comprises a displacement member 5. The displacement member 5 is coupled with the transporting support member 3 and is arranged to displace the transporting support member 3 between the first 100A and second 100B transporting positions in response to the change of the foldable vehicle 2 between the first 200A and second 200D vehicle positions, respectively. The displacement member may be a spring 6, a piston 5, a rod 5, a rack, a rope, a hawser, or a magnet, a permanent or an electromagnet.

In one embodiment the spring 6 is replaced by a magnet such that the magnet pulls the transporting support member 3 back from the second transporting position 100B to the first transporting position 100A in response to a change of the foldable vehicle 2 from the second vehicle position 200D to the first vehicle position 200A. In another embodiment, the transporting support member 3 is pulled back from the second 100B to the first 100A transporting position by a rope, a hawser, or a cable. In various embodiments, different pistons and rods may be utilized in moving the transporting member between the first and second transporting positions 100A, 100B.

According to an embodiment, the displacement mechanism 4 pulls the rope or the hawser attached to the transporting support member 5 in response to a change of the foldable vehicle 2 from the first 200A to the second 200D vehicle position. The rope or the hawser may also be attached to an additional element which may be displaced by the displacement mechanism 4 thus displacing the displacement member 5 via the rope or the hawser in response to a change of the foldable vehicle 2 from the first 200A to the second 200D vehicle position.

Alternatively or in addition, there may be a spring or a magnet for returning the displacement member 5 from the second transporting position to the first transporting position in response to a change of the foldable vehicle 2 from the second vehicle position to the first vehicle position. According to an embodiment, the magnet may be a permanent magnet or an electromagnet. Current of the electromagnet may be turned on by the displacement mechanism 4 in response to a change of the foldable vehicle 2 from the first 200A to the second 200D vehicle position.

The change of the transporting support member 5 between the first and the second transporting positions 100A, 100B in response to a change of the foldable vehicle 2 between the first and the second vehicle positions 200A, 200D may be performed by the same displacement member 5, such as the piston. Alternatively, the change from the first transporting position to the second transporting position be performed by, for example, the rope or the hawser while the change back from the second transporting position to the first transporting position may instead of the rope or the hawser be performed by, for example, the spring or the piston. One embodiment such as this is shown in Figs. 1-4, in which the piston 5 is displaced by the wedge displacing the transporting support member from the first transporting position to the second transporting position, and the spring 6 is used to displace the transporting support member back from the second transporting position to the first transporting position.

Figure 2 shows an example of the transporting support arrangement 1 utilizing the spring 6 as the displacement member 5 in the displacement mechanism 4. The spring 6 compresses when the wedge moves the rod 5 or the piston 5 in response to a change of the foldable vehicle from the first vehicle position 200A to the second vehicle position 200D. The spring 6 then returns the transporting support member 3 into the first transporting position 100A from the second transporting position 100B when the position of the foldable vehicle 2 is being changed back from the second vehicle position 200D to the first vehicle position 200A, or in this particular embodiment specifically from the second intermediate position 200C to the first intermediate position 200B. The spring 6 may also be arranged to extend in response to a change of the foldable vehicle 2 from the first 200A to the second vehicle position 200D, and then retract, thereby pulling the transporting support member 3 from the second transporting position 100B to the first transporting position 100A in response to a change of the foldable vehicle 2 from the second vehicle position 200B back to the first vehicle position 200A. Above-described could be realized, e.g., by an embodiment having the displacement member 5 displacing the transporting support member 3 and the spring 6 coupled to the foldable vehicle 2 and to the transporting support member 3.

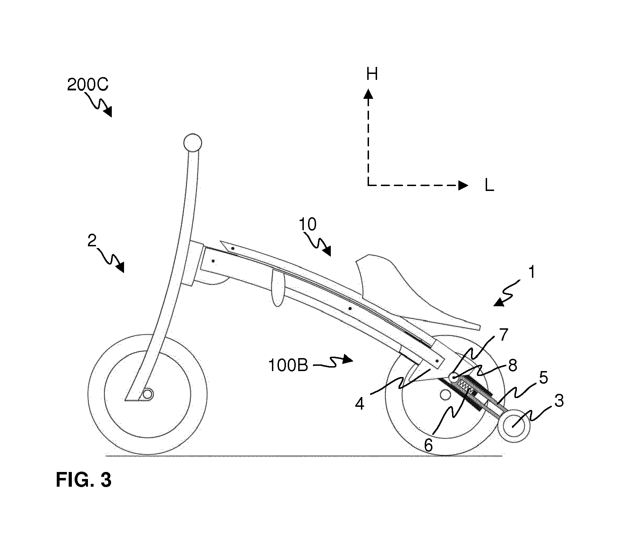

In Fig. 3, a counterpart 8 is shown which is to be received by an indent 7 in order to lock the transporting support member 3 into the second transporting position 100B. In this embodiment, the counterpart 8 is a dowel or a short rod. In some embodiments, the counterpart 8 may be a roller, or comprise a roller or a sliding surface in order to ease the moving of the counterpart 8 along the surface of the displacement mechanism 4, or in embodiment the wedge.

In some embodiments, the displacement mechanism 4 may be such that the transporting support member 3 is being displaced by the displacement member 5 such as e.g. a piston 5 or a (second) rod 5 between the first 100A and second 100B transporting support positions in response to a change of position of the vehicle between the first 200A and second vehicle positions 200D.

Figure 3 illustrates schematically an arrangement 1 in connection with a foldable vehicle 2 according to an embodiment of the present invention wherein the transporting support member 3 in the second transporting position 100B. The foldable vehicle in Fig. 3 is shown in the second intermediate position 200C. It can be seen that the displacement mechanism 4, in this case the wedge, displaces the transporting support member 3 via the displacement member 5, which is in this embodiment a piston 5 or a rod 5, when the position of the vehicle 2 changes from the first intermediate position 200B to the second intermediate position 200C. Thus the transporting support member 3, in this case the auxiliary wheel, changes position from the first transporting position 100A to the second transporting position 100B. The displacing may in some embodiments be performed directly by the displacement mechanism 4 such as the wedge.

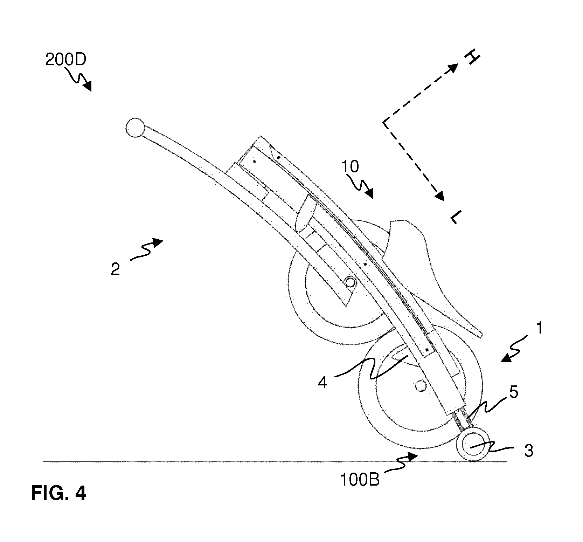

Figure 4 illustrates schematically an arrangement 1 in connection with a foldable vehicle 2 according to an embodiment of the present invention wherein the foldable vehicle 2 in the second vehicle position 200D, i.e. in transporting position, and the transporting support member 3 in the second transporting position 100B. In the second transporting position 100B, the transporting support member 3 is positioned at least in the direction of the longitudinal axis so that the transporting support member 3 protrudes or extends further than other parts of the foldable vehicle 2. This enables a user to adjust the foldable vehicle 2 in the second vehicle position 200D to a position where transporting is possible and convenient. This position is illustrated in Fig. 4 wherein the transporting support member 3 is in contact with the ground (illustrated by the horizontal line) but rest of the foldable vehicle is clear from the ground.

In some embodiments, there may be at least two transporting support members 3. These are advantageously located on opposite side of the foldable vehicle 2 relative to the plane defined by the height H and the longitudinal L axes of the foldable vehicle. In addition, it is advantageous that the at least two transporting support members 3 are positioned on the respective locations on the opposite sides of said plane.

The specific examples provided in the description given above should not be construed as limiting the applicability and/or the interpretation of the appended claims. Lists and groups of examples provided in the description given above are not exhaustive unless otherwise explicitly stated.

## Claims

1. A transporting support arrangement (1) for a foldable vehicle (2) having at least a first vehicle position (200A) and a second vehicle position (200D), the arrangement (1) comprising
- a transporting support member (3), and
- a displacement mechanism (4) arranged to displace the transporting support member (3) from a first transporting position (100A) of the transporting support member relative to the foldable vehicle (2) to a second transporting position (100B) of the transporting support member relative to the foldable vehicle (2) in response to a change of the foldable vehicle (2) from the first vehicle position (200A) to the second vehicle position (200D), and back from the second transporting position (100B) to the first transporting position (100A) in response to a change of the foldable vehicle (2) from the second vehicle position (200D) to the first vehicle position (200A).

2. The arrangement of claim 1, wherein the transporting support member (3) is arranged to protrude in the direction of the longitudinal axis (L) of the foldable vehicle (2) in response to the change of the foldable vehicle from the first vehicle position (200A) to the second vehicle position (200D), and wherein the transporting support member (3) is arranged to retract in the direction of the longitudinal axis (L) in response to the change of the foldable vehicle (2) from the second vehicle position (200D) to the first vehicle position (200A).

3. The arrangement of claim 1 or 2, wherein the arrangement comprises a locking mechanism configured to lock the transporting support member (3) to the second transporting position (100B) in the second vehicle position (200D), and/or wherein the locking mechanism is also configured to lock the foldable vehicle (2) into the second vehicle position (200D).

4. The arrangement of any one of the preceding claims, wherein the displacement mechanism (4) comprises a displacement member (5), which is coupled with the transporting support member (3) and is arranged to displace the transporting support member (3) from the second transporting position (100B) to the first transporting position (100A) in response to the change of the foldable vehicle (2) from the second vehicle position (200D) to the first vehicle position (200A).

5. The arrangement of claim 4, wherein said displacement mechanism (4) is arranged to couple with said transporting support member (3) via said displacement member (5, 6) and thereby displace said transporting support member (3) between said first and second transporting positions (100A, 100B).

6. The arrangement of any one of the preceding claims, wherein the displacement mechanism (4) comprises a wedge (4) or rod, wherein the wedge (4) or rod is arranged to move in response to the change of the foldable vehicle (2) from the first vehicle position (200A) to the second vehicle position (200D) and further to couple with said transporting support member (3) and thereby displace said transporting support member (3) from said first transporting position (100A) to said second transporting position (100B).

7. The arrangement of claim 3 and 6, wherein the wedge (4) comprises an indent (7) for receiving a counterpart (8) in response to the change of the foldable vehicle (2) from the first vehicle position (200A) to the second vehicle position (200D), whereupon said counterpart (8) is coupled with said transporting support member (3) and whereupon said wedge (4) is arranged to displace said transporting support member (3) from said first transporting position (100A) to said second transporting position (100B) by displacing said counterpart (8).

8. The arrangement of claim 7, wherein the counterpart (8) comprises a roller or a sliding surface arranged to be in contact with the wedge during at least a part of the change of position from the first position (100A) of the transporting support member to the second position (100B) of the transporting support member.

9. The arrangement of any one of the preceding claims, wherein the arrangement comprises at least two transporting support members on opposite sides of the plane defined by the directions of height (H) and longitudinal axis (L) of the foldable vehicle.

10. The arrangement of claim 9, wherein said two transporting support members are arranged at the respective positions relative to the foldable vehicle (2).

11. The arrangement of any one of the claims 4-10, wherein the displacement member (5, 6) is one of the following: a spring (6), a piston (5), a rod (5), a rack, a rope, a hawser, or a magnet.

12. The arrangement of any one of the preceding claims, wherein the transporting support member (3) is one of the following: a wheel (3), a ski, a roller, or a slide.

13. A foldable vehicle (2) comprising a transporting support arrangement (1) of any of the preceding claims.

14. The foldable vehicle of claim 13, wherein the foldable vehicle (2) comprises an upper frame (10) to which the displacement member (4) is in connection with, and in response to a change of position of the upper frame (10), and thereby the foldable vehicle (2), the transporting support member (3) is being displaced.
